# EUROPEAN PATENT SPECIFICATION

(11) **EP 1 693 752 B1**
(45) Date of publication and mention of the grant of the patent: **09.04.2008**
(21) Application number: 06300035.0
(22) Date of filing: 17.01.2006
(51) Int. Cl.: G06F 9/46

(54) **Method for controlling a process resource access via a parent process**
Verfahren zur Steuerung eines Ressourcenzugriffs eines Prozesses durch einen Elternprozess
Procédé de contrôle d'accès à une ressource de traitement par un traitement père

(30) Priority: 19.01.2005 US 37121
(43) Date of publication of application: 23.08.2006
(73) Proprietor: Alcatel Lucent, 75008 Paris (FR)
(72) Inventor: Robison, Andrew, Woodlawn, Ontario K0A 3M0 (CA)
(74) Representative: Korakis-Ménager, Sophie

(56) References cited:
- KURCHUK, A: "Recursive sandboxes: Extending Systrace to empower applications" INTERNET ARTICLE, [Online] 25 July 2004 (2004-07-25), pages 1-16, XP002377438 Retrieved from the Internet: URL:http://web.archive.org/web/20040725140 723/http://nsl.cs.columbia.edu/projects/gr idlock/systrace_extensions.pdf> [retrieved on 2006-04-19]
- GARFINKEL, T ET AL: "Ostia: A Delegating Architecture for Secure System Call Interposition" INTERNET ARTICLE, [Online] 4 December 2003 (2003-12-04), pages 1-15, XP002377439 Retrieved from the Internet: URL:http://web.archive.org/web/20031204014 221/www.stanford.edu/~talg/papers/NDSS04/o stia-ndss04.pdf> [retrieved on 2006-04-19]
- GARFINKEL T: "Traps and pitfalls: practical problems in system call interposition based security tools" NETWORK AND DISTRIBUTED SYSTEM SECURITY SYMPOSIUM, [Online] 6 February 2003 (2003-02-06), pages 1-14, XP002377440 San Diego, CA, USA Retrieved from the Internet: URL:http://web.archive.org/web/20040228195 150/http://www.stanford.edu/~talg/papers/t raps/traps-ndss03.pdf> [retrieved on 2006-04-19]
- GOLDBERG I ET AL: "A secure environment for untrusted helper applications" PROCEEDINGS OF 6TH USENIX UNIX SECURITY SYMPOSIUM, [Online] 22 July 1996 (1996-07-22), pages 1-13, XP002377441 Retrieved from the Internet: URL:www.cs.berkeley.edu/~daw/papers/janus- usenix96.ps> [retrieved on 2006-04-19]

## Description

### FIELD OF INVENTION

The present invention relates to a system and method for executing a process on a microprocessor-enabled device.

### BACKGROUND OF THE INVENTION

In a microprocessor-enabled device, such as a computer, a communication switch, a ABS control module in a car or a toaster, often several separate processes may be active simultaneously that compete for operational cycles from the microprocessor and resources associated with the microprocessor. An operating system is critical for controlling operation of a process and its requests for resources. One exemplary operating system is Microsoft XP (trade-mark of Microsoft Corporation) which is frequently installed as an operating system on computers having an Intel microprocessor, such as a Pentium (trade-mark of Intel Corporation) microprocessor, as their central processing unit.

It is useful to control operation of processes executing on the device to ensure that operation or failure of a given process either does not affect or have a restricted effect on other processes operating on the device. For example, if one process has a fatal error, its demise preferably should not affect the other processes; it should gracefully wind down from the other processes. Also, execution of a process should not access files, data, memory or resources which it does not have authorization to access.

It is also useful to control operation of such processes because their provenance may be questionable. With downloading of programs via the Internet being prevalent, it is possible that the downloaded program may contain malicious code or routines which may adversely affect either the computer, its data or other programs operating on the computer.

Several prior art techniques and systems are available that attempt to isolate operation of a process from other elements in such devices.

For example, a software "sandbox" is code which provides an isolation technique to define a restricted set of resources, in a "sandbox", for a target process. All resource requests made by the process are moderated by a security monitor which acts to verify and inspect the code before allowing it to be executed. Verification may involve using digital signatures on the code to check its provenance and byte-by-byte code inspection for security conformance, etc. Typically, the code in the process sandbox must be inspected for relevant design, implementation and configuration errors.

Code checking is another technique. Code checking evaluates a process for design and implementation flaws. Specifically, each line of code of a process is checked, against template which identifies configuration errors. It will be appreciated that the code checking may need to evaluate hundreds of thousands of lines of code before user configuration errors are considered.

A hardware ring provides another protection technique. The ring, which is commonly seen in operating system architectures, provides two modes of operation for a microprocessor. A first mode provides unrestricted access to a process to all resources controlled by the microprocessor. A second restricted mode provides a process with only certain access to certain resources. A hardware ring typically uses attributes of the user's process, such as user's name and the name of the process, to determine the level of access provided to the process. Operating systems work in conjunction with the modes to control access to resources. In many operating systems, a security policy is encoded into the operating system and relies on run-time attributes of the user's process and the system resource being accessed to determine access rights.

Hardware rings are not as flexible as software sandboxes, but typically offer a more secure implementation. The hardware ring, ensures that the operating system code and data are not accessible by a user process.

KURCHUK, A: "Recursive sandboxes: Extending Systrace to empower applications" INTERNET ARTICLE, [Online] 25 July 2004 (2004-07-25), pages 1-16) discloses the Systrace system interposition mechanism as a method for containing untrusted code through program-specific policies enforced by user-level daemons and extensions to Systrace that allow sandboxed processes to further limit their children processes by issuing dynamically constructed policies. Extensions to the Systrace dameon and the OpenBSD kernel, as well as an API for constructing policies are discussed.

There is a need for a system and method of processing database operations which address deficiencies in the prior art.

### SUMMARY OF THE INVENTION

In a first aspect, a method for controlling a request for a resource from a process operating on a microprocessor-enabled machine is provided. The method comprises regulating access of the process to the resource associated with the machine via a parent process when the process initiates the request to an operating system associated with the machine, the parent process operating outside of the operating system.

In the method, the parent process may spawn the process.

In the method the request may initially be received by an access process in the operating system. Then, the access process may initiate a second request to the parent process to check whether the process has clearance to access the resource. Then, the parent process may provide a signal to the access process indicating whether the process has the clearance.

In the method, if the parent process indicates that the process does not have the clearance, then the access process may deny the process access to the resource.

In the method, if the parent process indicates that the process has the clearance, then the access process may conduct another access check within the operating system to determine whether the process can have access to the resource.

In a second aspect, module of an operating system for controlling a request for a resource from a process operating on a microprocessor-enabled machine is provided. The module comprises a process for regulating access of the process to the resource of the machine via a parent process when the process initiates the request to an operating system on the machine, the parent process operating outside of the operating system.

In the module ofthe operating system , the parent process may spawn the process.

In the module of the operating system, the request may be initially received by an access process in the operating system. Subsequently, the access process may initiate a second request to the parent process to check whether the process has clearance to access the resource. Subsequently, the parent process may provide a signal to the access process indicating whether the process has the clearance.

In the module of the operating system, if the parent process indicates that the process does not have the clearance, then the access process may deny the process access to the resource.

In the module of the operating system, if the parent process indicates that the process has the clearance, then the access process may conduct another access check within the operating system to determine whether the process can have access to the resource.

In other aspects, various combinations of the above aspects may be provided in further sets and subsets.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

Figure 1 is a block diagram of a computer system having access to a network;

Figure 2 is a block diagram of a prior art system providing a security system for the computer system of Fig. 1;

Figure 3 is a block diagram of an operating system kernel associated with the computer system of Fig. 1; and

Figure 4 is a block diagram of an embodiment of the invention operating with the operating system of Fig. 3.

### DETAILED DESCRIPTION OF AN EMBODIMENT

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

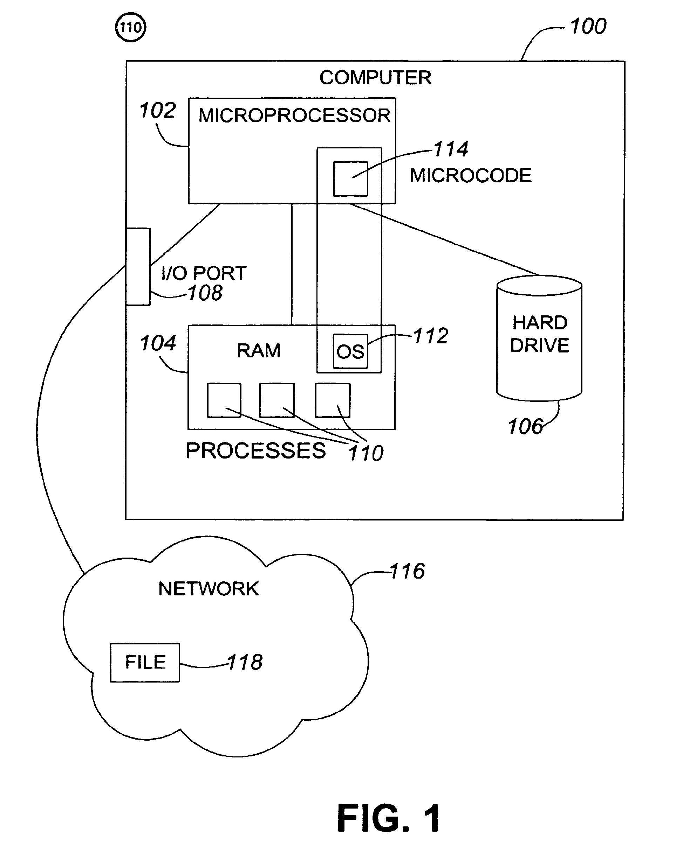

Referring to Figure 1, computer 100 is a microprocessor-enabled system providing an environment for execution of software and processes thereon. Computer 100 comprises microprocessor 102, RAM 104, hard-drive 106, input/output (I/O) port 108. As is common with other computer systems, computer system 100 has processes 110 thereon which are loaded into RAM 104. Processes 110 provide a set of executable software code which provides instructions for microprocessor 102 in its native code language. When any one of processes 110 requires low level access to resources of computer 100 (such as files stored in hard-drive 106 or access to other files stored in RAM 104) operating system (OS) 112 provides an interface for system calls for microprocessor 102 for processes 110. Typically, OS 112 also interacts with microcode 114 on microprocessor 102.

Process 110 may be contained in file 118, which may be stored in other computers or data servers in network 116. Generally, computer 100 may receive file 118 from network 116 via I/O port 108 in one of two methods. First, software operating on computer 100 may actively identify and request file 118 from network 116. Alternatively, file 118 may be "pushed" to computer 100 via an external process operating from an element in network 116, causing file 118 to be downloaded into computer 100 without any initial request from computer 100. It will be appreciated that once file 118 is received by computer 100, it is installed as a process 110 into RAM 104.

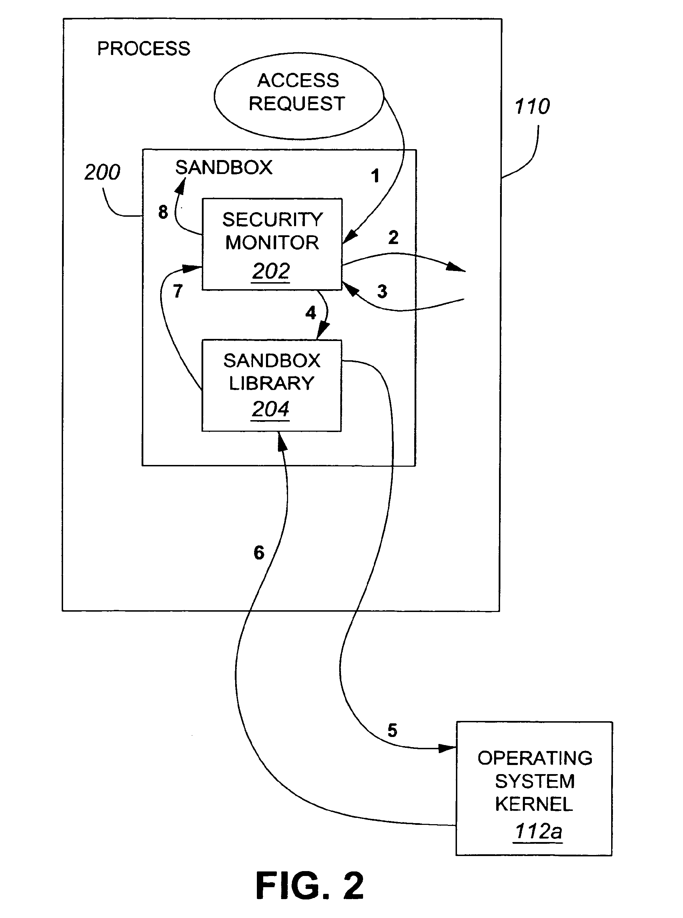

Referring to Fig. 2, sandbox 200 is shown operating in conjunction with process 110. Preferably, modules in sandbox 200 provide verification and inspection of code associated with process 110 before allowing execution of the code. Generally, code verification is conducted by checking of a digital signature on the code and byte-by-byte inspection of the code for security policy conformance.

Therein, sandbox 200 provides security monitor module 202 and sandbox library module 204. In operation, sandbox 200 runs externally to process 110. The steps executed by sandbox 200 are as follows. In step (1), a line of code in process 110 initiates a request to access a system resource of computer 100 (such as a file) and the request is sent to security monitor 202. In steps (2) and (3) security monitor 202 checks privileges of process 110 with process 110 against a set of access privilege and receives a yes/no response. Access privileges may established based upon several facts, including: ownership of file, file location, user identity of process, privileges of process and others. It will be appreciated that other privileges may be defined. In the present embodiment for example, if the file is the system password file, then the calling process may require system management privileges to open the file. In step (4), if access is allowed, the request is passed through sandbox library 204. Subsequently, in step (5), sandbox library converts the request to an appropriate low level operating system call for operating system 112. The operating system call is then provided to operating system kernel 112A and in step (6) the results of the call are returned to library 204, thereby fulfilling the access. The results of a system call on most operating systems will be an integer error status code (for instance, "0" for success and "-1" for failure). Side effects of a system call include: a changing of memory contents in passed memory buffers, updates to the processes or a file's contents or status. Thereafter, in step (7), sandbox library modifies the result code and changes any passed back memory buffers, etc. such that the captive process is isolated from the original system call return. Instead, the captive process would see a modified call return. In other embodiments, step 7 is foregone.

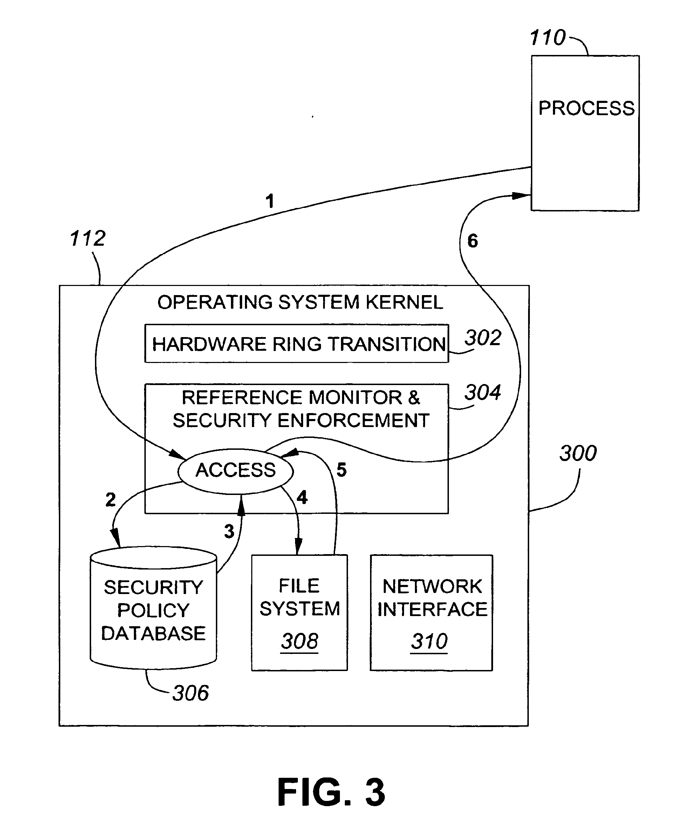

Referring to Fig. 3, relating to an embodiment, system 300 is shown existing within OS kernel 112A. Therein, several processes are provided to control access to resources, including hardware ring transition process 302, reference monitor and security enforcement (RMSE) process 304, security policy database 306, file system 308 and network interface process 310.

Hardware ring transition 302 controls access to the OS 112 and any protected resources. The processes 110 are in the restricted ring and the OS 112 is in the unrestricted ring. For a process to access the OS it must make a ring transition call (system call or gate) to a specific controlled entry point in the OS. The OS then validates the request before acting upon it.

RMSE module 304 provides security enforcement for kernel 112. It controls access to file systems 308 associated with computer 100. Typically, a file access request from process 110 (not shown) is controlled by RMSE module 304. Steps executed involving RMSE module 304 for security enforcement comprise the following steps. In step (1), process 110 requests access to a resource, which is redirected by kernel 112 to RMSE module 304. All system calls are made by invoking a processor's "gate" call mechanism which varies by processor family, which then changes the ring and steps into kernel code at a kernel controlled entry point. Identifying which system call is being made is usually determined by a value present in a register at the time that the gate call was invoked. In step (2), RMSE module 304 initiates a call to security policy database 306 to enable RMSE module 304 to determine whether the call is permissible. In step (3), security policy database 306 is checked to determine whether the process can perform the requested system call with the specified parameters, e.g. "file open on /tmp/foo.txt". Typically, system calls are not executed here. However the security policy database 306 may use files or other external resources as sources of data input for the security lookup. If the process can be performed, then the process is allowed to be executed. An answer to the call is generated and is provided to RMSE module 304. This provides a ring transition which preferably ensures that the processes cannot bypass the steps by communicating or otherwise directly interacting with each other or something like a file which is protected by the OS. In step (4), if the answer allows access by the call, the call is passed to file system 308. In step (5) file system 308 fulfills the call and provides it to RMSE module 304. In step (6), the file is provided to process 110. It is notable that all file accesses by process 110 go through hardware ring transition 302. The above noted steps would be executed as follows for an exemplary system call:
Step (1) Process 110 makes a "file open" system call (ring transition).
Step (2) The RMSE module invokes code (SPDB 306) to check the security policy of the system; no system call as we are already in the kernel.
Step (3) The SPDB checks whether the process can perform the requested system call with the specified parameters (for instance, file open on "/tmp/foo.txt"). There will normally be no system calls here although the SPDB may be using "files" or other external resources as sources of data inputs for the security lookup.
Steps (4) to (6) No changes; no system calls as this is all usually internal to the kernel. Ring transition back to "user" ring from "kernel" ring at step (6).

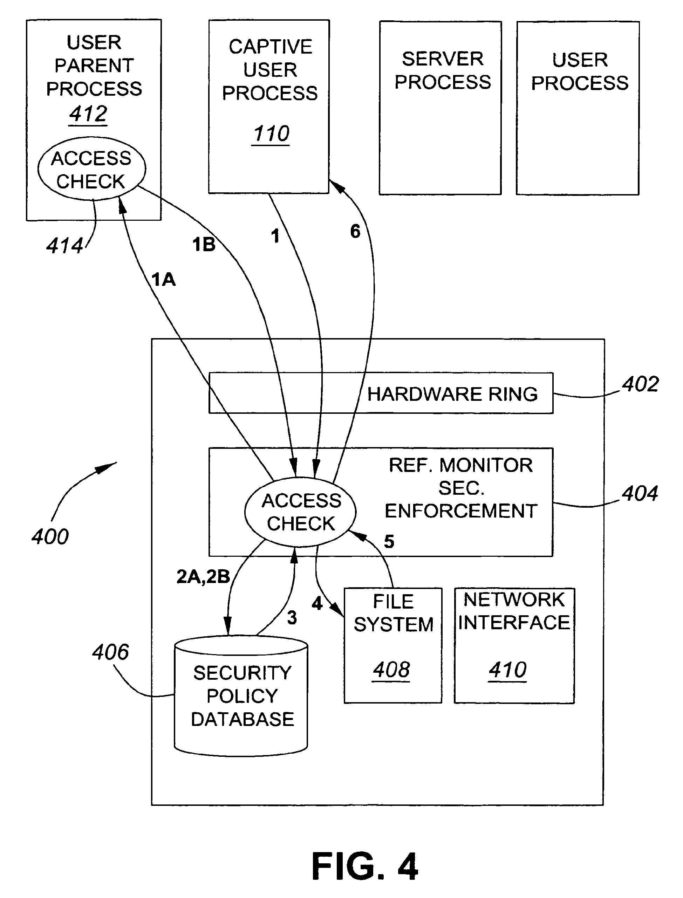

Referring to Fig. 4, an embodiment is provided in system 400 in kernel 112 which has similar features as to system 300 (Fig. 3). For example, system 400 has several processes to control access to resources, including hardware ring transition process 402, RMSE process 404, security policy database 406, file system 408 and network interface process 410. System 400 also has user parent process 412 provided which spawns captive user process 110. As with system 300, in system 400, in step (1), process 110 requests access to a resource, which is redirected by kernel 112 to RMSE module 304, similar to step (1) described earlier. Next, step (1A) is performed where a check is made from RMSE module 404 to access check process 414 in user parent process 412. In the check, RMSE asks for permission from parent process. In step (1B), access check process 414 considers and generates a response. Access check process 414 may check for a series of initial accesses. If any one access fails, then user parent process 412 sends a message to captive user process 110 informing it that the request is denied-/failed. If all access requests are allowable, then access check process 414 sends a request to RMSE module of the kernel 112. The parent process may check for security policy violations which are unknown to the operating system such as when the child process is parsing an email message it should not be attempting to modify a file, such as an operating system file. The majority of virus, worm and phishing attacks seen today are not violations of the operating system policy (user / file permissions). Instead, they are frequently violations of common sense (email program modifying operating system, reading password file, etc.). This check in Fig. 4 differs from the check done for Fig. 3, as it is most likely constrained by common sense or design criteria associated with the purpose of the child process.

Subsequently the request for resources may be handled in steps 2 to 6 as noted for system 300. For instance, typical restrictions on system calls can be processed as usual in steps (2) through (6). As an example, if the resource requests that a file be written to, when the file is marked as "read-only", then steps (2) through (6) will recognize this inappropriate call and block the access. There are similarities with the process in Fig. 3, except that there may be a validation Step (5A) and Step (5B) which follows Step (5) before Step (6). In particular, in Step (5A) the results of the system call may be validated and optionally modified by the parent and this modified result passed back to the OS in (5B) and then on to the child in (6).

On a subsequent request for a subsequent resource by the captive user process 110, steps 1, 1A, 1B, and 2-6 are repeated. Preferably, system 400 reduces or eliminates a need to perform a security inspection code performance before it is executed. It will be appreciated that user parent process 412 may spawn other captive processes 110. The repetition is that the parent can spawn a captive process per email to parse or web page to display. This repetition provides that each process does not interfere with the others by for instance stealing passwords from your bank login page. It will be appreciated that in system 400, the relationship between a parent process 412 and a child process 110 is a tree whereby a parent may have many children and a child may itself be a parent of one or more of its own children. In this regard, user process 110 need not actually know that it has a parent process 412 associated with it. This facilitates localization of operation of each process.

It will be appreciated that the embodiment may be implemented in various system call routines, operation system applications, software programs and even as a hardwired circuit, using techniques known in the art.

Although the invention has been described with reference to certain specific embodiments, various modifications thereof will be apparent to those skilled in the art without department from the scope of the invention as outlined in the claims appended hereto.

## Claims

1. A method for controlling a request for a resource from a process (110) operating on a microprocessor-enabled machine (100), the method comprising:
regulating access of said process (110) to said resource of said machine (100) via a parent process (412) when said process (110) initiates said request to an operating system (112) on said machine (100), said parent process (412) operating outside the kernel of said operating system (112),
wherein said parent process (412) spawns said process (110)
**characterized in that**:
said request is initially received by an access process (414) in said operating system (112); then, said access process (414) initiates a second request to said parent process (412) to check whether said process (110) has clearance to access said resource; and
then, said parent process (414) provides a signal to said access process (414) indicating whether said process (110) has said clearance.

2. The method as claimed in claim 1, wherein, if said parent process (412) indicates that said process (110) does not have said clearance, then said access process (414) denies said process (110) access to said resource.

3. The method as claimed in claim 1, wherein, if said parent process (412) indicates that said process (110) has said clearance, then said access process (414) conducts another access check within said operating system (112) to determine whether said process (110) can have access to said resource.

4. A module of an operating system for controlling a request for a resource from a process (110) operating on a microprocessor-enabled machine (100), the module comprising:
a process (404) for regulating access of said process (110) to said resource of said machine (100) via a parent process (412) when said process (110) initiates said request to an operating system (112) on said machine (100), said parent process (412) operating outside the kernel of said operating system (112),
wherein said parent process (412) spawns said process (110),
**characterized in that**:
said request is initially received by an access process (414) in said operating system (112); then, said access process (414) initiates a second request to said parent process (412) to check whether said process (110) has clearance to access said resource; and
then, said parent process (412) provides a signal to said access process (414) indicating whether said process (110) has said clearance.

5. The module as claimed in claim 4, wherein, if said parent process (412) indicates that said process (110) does not have said clearance, then said access process (414) denies said process (110) access to said resource.

6. The module as claimed in claim 4, wherein, if said parent process (412) indicates that said process (110) has said clearance, then said access process (414) conducts another access check within said operating system (112) to determine whether said process (110) can have access to said resource.

## Patentansprüche

1. Verfahren zur Steuerung einer Ressourcen-Anforderung von einem Prozess (110), dar auf einem mit einem Mikroprozessor ausgestatteten Gerät (100) läuft, wobei das Verfahren folgendes umfasst :
Regelung des Zugriffs des Prozesses (110) auf die Ressource des Gerätes (100) über einen Eltern-Prozess (412), wenn der Prozess (110) die Anfrage an ein Betriebssystem (112) auf dem Gerät (100) auslöst, wobei der Eltern-Prozess (412) außerhalb des Kernels des Betriebssystems (112) arbeitet,
wobei der Eltern-Prozess (412) den Prozess (110) erzeugt,
**dadurch gekennzeichnet, dass**
die Anforderung zuerst von einem Zugriffs-Prozess (414) im Betriebssystem (112) empfangen wird;
dann der Zugriffs-Prozess (414) eine zweite Anforderung an den Eltern-Prozess (412) auslöst, um zu überprüfen, ob der Prozess (110) die Genehmigung hat, auf die Ressource zuzugreifen; und
dann der Eltern-Prozess (414) ein Signal an den zugriffs-Prozess (414) liefert, das anzeigt, ob der Prozess (110) die Genehmigung hat.

2. Verfahren, wie in Anspruch 1 beansprucht, wobei, wenn der Eltern-Prozess (412) anzeigt, dass der Prozess (110) keine Genehmigung hat, der Zugriffs-Prozess (414) dem Prozess (110) den Zugriff zu der Ressource verweigert.

3. Verfahren, wie in Anspruch 1 beansprucht, wobei, wenn der Eltern-Prozess (412) anzeigt, dass der Prozess (110) die Genehmigung hat, der Zugriffs-Prozess (414) eine andere Zugriffs-Überprüfung im Betriebssystem (112) durchführt, um festzustellen, ob der Prozess (110) Zugriff zu der Ressource haben kann.

4. Ein Modul eines Betriebssystems zur Steuerung einer Ressourcen-Anforderung von einem Prozess (110), der auf einem mit einem Mikroprozessor ausgestatteten Gerät (100) läuft, wobei das Modul folgendes umfasst:
einen Prozess (404) zur Regelung des Zugriffs des Prozesses (110) auf die Ressource des Gerätes (100) über einen Eltern-Prozess (412), wenn der Prozess (110) die Anforderung an ein Betriebssystem (112) auf dem Gerät (100) auslöst, wobei der Eltern-Prozess (412) außerhalb des Kernels des Betriebssystems (112) arbeitet,
wobei der Eltern-Prozess (412) den Prozess (110) erzeugt,
**dadurch gekennzeichnet, dass**
die Anforderung zuerst von einem Zugriffs-Prozess (414) im Betriebssystem (112) empfangen wird;
dann der Zugriffs-Prozess (414) eine zweite Anforderung an den Eltem-Prozess (412) auslöst, um zu überprüfen, ob der Prozess (110) die Genehmigung hat, auf die Ressource zuzugreifen; und
dann der Eltern-Prozess (412) ein Signal an den Zugriffs-Prozess (414) liefert, das anzeigt, ob der Prozess (110) die Genehmigung hat.

5. Modul, wie in Anspruch 4 beansprucht, wobei, wenn der Eltern-Prozess (412) anzeigt, dass der Prozess (110) die Genehmigung nicht hat, der Zugriffs-Prozess (414) dem Prozess (110) den Zugriff zu der Ressource verweigert.

6. Modul, wie in Anspruch 4 beansprucht, wobei, wenn der Eltern-Prozess (412) anzeigt, dass der Prozess (110) die Zugriffs-Überprüfung im Betriebssystem (112) durchführt, um festzustellen, ob der Prozess (110) Zugriff zu der Ressource haben kann.

## Revendications

1. Procédé de contrôle d'une requête de ressource provenant d'un processus (110) fonctionnant sur une machine à microprocesseur (100), le procédé comprenant:
la régulation de l'accès dudit processus (110) à ladite ressource de ladite machine (100) par l'intermédiaire d'un processus père (412) quand ledit processus (110) envoie la requête à un système d'exploitation (112) sur ladite machine (100), ledit processus père (412) fonctionnant en dehors du noyau dudit système d'exploitation (112),
dans lequel, ledit processus père (412) génère dynamiquement ledit processus (110)
**caractérisé en ce que** :
ladite requête est initialement reçue par un processus d'accès (414) dans le système d'exploitation (112) ;
ensuite, ledit processus d'accès (414) envoie une deuxième requête audit processus père (412) afin de vérifier si ledit processus (110) est autorisé à accéder à ladite ressource ; et
ensuite, ledit processus père (414) fournit un signal audit processus d'accès (414) indiquant si ledit processus (110) est autorisé à accéder à ladite ressource.

2. Procédé selon la revendication 1, dans lequel, si ledit processus père (412) indique que ledit processus (110) n'est pas autorisé à accéder à ladite ressource, ledit processus d'accès (414) refuse alors audit processus (110) l'accès à ladite ressource,

3. Procédé selon la revendication 1, dans lequel, si ledit processus père (412) indique que ledit processus (110) est autorisé à accéder à ladite ressource, ledit processus d'accès (414) effectue alors une autre vérification d'accès au sein dudit système d'exploitation (112) pour déterminer si ledit processus (110) peut avoir l'accès à ladite ressource.

4. Module d'un système d'exploitation pour contrôler une requête de ressource depuis un processus (110) fonctionnant sur une machine à microprocesseur (100), le module comprenant :
un processus (404) pour réguler l'accès dudit processus (110) à ladite ressource de ladite machine (100) par l'intermédiaire d'un processus père (412) quand ledit processus (110) envoie ladite requête à un système d'exploitation (112) sur ladite machine (100), ledit processus père (412) fonctionnant en dehors du noyau dudit système d'exploitation (112),
dans lequel ledit processus père (412) génère dynamiquement ledit processus (110),
**caractérisé en ce que**:
ladite requête est initialement reçue par un processus d'accès (414) dans le système d'exploitation (112);
ensuite, ledit processus d'accès (414) envoie une deuxième requête audit processus père (412) afin de vérifier si ledit processus (110) est autorisé à accéder à ladite ressource : et
ensuite, ledit processus père (412) fournit un signal audit processus d'accès (414) indiquant si ledit processus (110) est autorisé à accéder à ladite ressource.

5. Module selon la revendication 4, dans lequel, si ledit processus père (412) indique que ledit processus (110) n'est pas autorisé à accéder à ladite ressource, ledit processus d'accès (414) refuse alors audit processus (110) l'accès à ladite ressource.

6. Module selon la revendication 4, dans lequel, si ledit processus père (412) indique que ledit processus (110) est autorisé à accéder à ladite ressource, ledit processus d'accès (414) effectue alors une autre vérification d'accès au sein dudit système d'exploitation (112) pour déterminer si ledit processus (110) peut avoir l'accès à ladite ressource.
